# EUROPEAN PATENT SPECIFICATION

(11) **EP 2 334 990 B1**
(45) Date of publication and mention of the grant of the patent: **06.03.2019**
(21) Application number: 09811772.4
(22) Date of filing: 21.08.2009
(51) Int. Cl.: F24C 15/32, A47J 36/38, A47J 37/07

(54) **DEVICE FOR REDUCING THE PREPARATION TIME IN OVENS HAVING ROTARY BASKET**
VORRICHTUNG ZUR VERKÜRZUNG DER GARZEIT IN ÖFEN MIT EINEM RUNDKORB
DISPOSITIF POUR LA RÉDUCTION DU TEMPS DE PRÉPARATION DANS DES FOURS COMPRENANT UN PANIER ROTATIF

(30) Priority: 05.09.2008 SE 0801916; 02.06.2009 SE 0950399
(43) Date of publication of application: 22.06.2011
(73) Proprietor: Gf Products Aktiebolag, 506 34 Borås (SE)
(72) Inventor: HANSSON, Bengt, S-413 23 Göteborg (SE); FORSBERG, Gunnar, S-523 97 Ulricehamn (SE)
(74) Representative: AWA Sweden AB
(86) International application number: PCT/SE2009/050943
(87) International publication number: WO 2010/027316

(56) References cited:
- EP-A1- 0 632 875
- GB-A- 2 119 922
- US-A- 5 662 029
- US-A- 5 780 815
- US-A- 5 868 064
- US-A- 6 070 517
- US-A1- 2005 092 313
- US-A1- 2005 092 313

## Description

### TECHNICAL FIELD

The present invention relates to a device for convection oven preparation of food, comprising an oven compartment having a rotary preparation basket, a circulating fan, at least one heating element, at least one air inlet for cold air.

### BACKGROUND

In convection ovens, where there is a first preparation stage with air contained in the oven compartment which has been saturated with vapour produced when the temperature of the product being prepared reaches such values that the water contained in the product being prepared is transformed to vapour, it is a known fact that this vapour contributes to increasing the heat transporting capacity of the circulating cooking air. When a stage has been reached where the product being prepared e.g. is fully cooked or the like, and where a crisp surface is desired, the vapour in the circulating air, flowing over the food product being prepared, has to be vented out as quickly as possible without noticeable heat losses, so that the product being prepared is only subjected to dry, hot air, wherein this exposure to browning also should take place quickly and uniformly in order to reduce the preparation time. When preparing e.g. French fries, it is of very great importance for, *inter alia*, street kitchens, road restaurants and restaurants to shorten each preparation step, even if each time reduction would be only a matter of parts of minutes.

When admitting ventilating air after a first preparation stage, this cold air causes a very disadvantageous lowering of the temperature of the heat transport medium before it passes the product being prepared. The cold ventilating air also produces partial regions with colder air in the heat transport medium, when it flows over the product being prepared. Also this has a very disadvantageous influence on the end result of the product being prepared, since the product being prepared, independent of whether it consists of one or many small units, is not subjected to an even heat uniformly over all parts. This is due to the fact that the air inlet for cold ventilating air produces pronounced zones of air at a considerably lower temperature, especially if the cold ventilating air is admitted into the oven compartment without having passed the heating elements before it reaches the food product being prepared. Also in cases where cold ventilating air is admitted before the heating elements, this air does not become heated to the same temperature as the other circulating hot air and zones of lower temperature than the other circulating hot air, and then results zones of lower temperature, albeit to a smaller extent. Even if measures have been taken to increase the turbulence in the oven compartment for a more uniform mixing of the cold ventilating air flowing into the hot circulating heat transport medium, in spite of this it cannot be prevented, due to the design of the oven compartment, that relatively large temperature variations arise in different parts of the heat transport medium circulating in the oven compartment, resulting in an uneven preparation.

This applies to all ovens, but especially to ovens where there is a forced air circulation and where the major part of the heated air flows through a perforated, rotating, horizontally suspended preparation basket, which contains many smaller products being prepared and wherein these products being prepared consist of smaller pieces which, by means of the rotation, are stirred around so that the individual pieces are alternately exposed to the heat transport medium when it flows around the surface of the kneaded mass inside the preparation basket. In the ovens existing on the market having a horizontally rotating preparation basket, the preparation baskets are without exception designed with a planar cover and three planar walls constituting sides and bottom of a box-like preparation basket, the shape of which provides an adequate kneading and mixing of the food product being prepared at filling ratios up to approx. 50 %. In certain cases, where the object is to obtain a crisp surface, for example on French fries or the like, browning and drying of the surface has to take place so rapidly that the moisture contained inside the mass of product being prepared does not remain to any substantial extent, which in that case results in a disadvantageous compromise between outer crispness and inner moistness. When ovens of the types existing on the market are filled with the largest recommended amount of products to be prepared, which amount usually is about 70 % of the capacity of the preparation compartment, primarily only the outer portions of the kneaded food product being prepared will be exposed to the circulating heat transport medium. This is due to the fact that when products being prepared which fill the food preparation compartment to more than 50 % are kneaded, these food products assume a shape which can be likened to a roll, which substantially only rolls around in the rotating preparation basket. The larger the rotating amount of food product being prepared is, the smaller is the space available for the roll formed by the product being prepared to be able to fall down and be disrupted, when it follows the preparation basket upward while the same is rotating, implying that the inner parts of the rotating product being prepared are not exposed to enough dry and hot air to cause the outer surface of the individual pieces inside the rotating amount of food being prepared to become browned in such a way that a desired crispness is achieved. This in spite of the fact that there may be devices in the rotary preparation basket for moving the food product being prepared upward during the rotation, in order to increase the drop height. In existing ovens, the disadvantages described herein are compensated with a longer preparation time, which has the consequence that the preparation result is impaired considerably since, due to uneven exposure to hot air, each individual part of the product being prepared does not obtain the uniform quality which is desirable for the result to meet the stipulated quality requirements.

Document GB211922A discloses the preamble of claim 1.

### SUMMARY OF THE INVENTION

The subject-matter of claim 1 discloses the present invention.

The related problems can be solved in different ways within the scope of the present invention. An even and substantially uniform hot air temperature, which is advantageous for the food preparation, is obtained by immediately distributing the cold air substantially uniformly into the cooled-down hot air after passage mainly through the product being prepared, before the air passes through one or several air heaters. Placing the fresh air inlet, with or without air valve for the incoming ventilating air, behind the circulating fan of the oven compartment, in close connection with the shaft of the circulating fan, is an advantageous way of achieving a good mixing. The air inlet can advantageously be distributed between smaller openings around and close to the shaft of the circulating fan of the oven compartment. The cold ventilating air then enters in the gap behind the circulating fan. The incoming ventilating air distributes radially and uniformly into the cooled-down heat transport medium at the periphery of the circulating fan of the oven compartment.

By means of this basic method a substantial reduction of the preparation time is achieved. The cold ventilating air can be blown in by a special fan at the air inlet to the oven compartment, or by a positive pressure produced inside the enclosing outer casing by means of a fan system. This fan system can, for example, be part of a cooling system for electronics, touchable surfaces, or the like. In an embodiment where the oven has no positive pressure inside the oven casing and where, due to lack of space, it is less convenient to have a special fan for blowing ventilating air into the oven compartment, the backside of the fan wheel for the heat transport medium inside the oven compartment can be provided with small fan blades for enhancing the suction effect which is normally created in the gap space between the backside of the rotating fan wheel and the oven wall. The size of these fan blades is adapted to the amount of ventilating air required for each specific type of oven. After the circulating cooking air has passed the air heater, it is positively directed in such a way that the major part of the hot heat transport medium having a uniform temperature is forced to pass from below upward through the product being prepared as a primary air flow, instead of, as in existing types of ovens, mostly only sweeping over the shell surface of the rotating roll consisting of the food product being prepared, and the parts which are close to this shell surface. If the heat transport medium can instead be forced to pass through the food product being prepared, a much more even and uniform food preparation would be achieved, and no time compensation for regions inside the roll, which otherwise would not have been reached by hot air of desired temperature, would not have had to be made and the gain would then be that the preparation time would become somewhat shorter. Products to be prepared consisting of a larger number of smaller pieces are particularly suited for this positively directed through-blowing of a heat transport medium with a homogenous temperature. The total sum of the time reductions, which can be made in each individual preparation stage, can therefore be significant when the product being prepared goes through the different preparation stages, starting with thawing, then cooking with subsequent surface drying, and finally browning, and where it is desired to obtain a juicy inside with an outer crispness. This applies particularly when preparing for example French fries or the like. This time reduction is achieved by forcing a dry, hot primary air stream into and through the food product being prepared, which is kneaded in a perforated, rotating, horizontally suspended preparation basket, and thereby removing the vapour formed around each individual piece being prepared, also inside the rotating roll of the product being prepared, in an efficient and rapid manner.

The substantially uniform distribution of the cold ventilating air introduced in the heat transport medium is achieved by means of the inlet openings for the cold ventilating air being situated behind the circulating fan, wherein the ventilating air, due to the rotation of the circulating fan and the narrow gap between the backside of the circulating fan and the oven wall, is centrifugally discharged outward toward the periphery of the circulating fan, where the cold ventilating air is substantially uniformly mixed into the heat transport medium cooled down by the food product being prepared before it passes the heating elements, and that the substantially uniformly heated heat transport medium is forced to flow from below and through the entire mass of the product being prepared and to there emit its energy content inside the product being prepared before it reaches the intake opening of the circulating fan.

In those occasions when a rotary preparation basket is filled to more than 50 % of its volume, the kneading of the product being prepared can become impaired. For this reason, it is preferred that a preparation basket is not filled to more than about 70 % in order to maintain useful movement inside the rolling product being prepared. In order to prevent that the preparation time is negatively influenced at filling ratios greater than about 50 %, this can to a large extent be accomplished by adding a weaker secondary air flow, directed in such a way that it blows away the vapour-saturated air leaking out through the roll on its falling side, which is not reached by the primary air flow, which has been forced into the roll from below. The secondary air flow then carries away the vapour-saturated air upward above the food product being prepared, whereupon it can be sucked in through the intake opening to the circulating fan. The vapour-saturated air leaking out through the roll on its falling side tends to be retained as a stationary air vortex, the rotation of which has been initiated by the downward movement of the product being prepared. The amount of retained air at the falling side of the roll is dependent upon the filling ratio of the preparation basket. To transport away the heat transport medium which has been retained, there is conveniently a discharge opening, with or without air valve, on the guide vane/duct and directed so that it blows a secondary air flow diagonally upward toward the downwardly rolling shell surface of the rotating quantity of food being prepared in order to counteract that the vapour-saturated air leaking out there is carried down, or remains outside or immediately inside of the shell surface when it has passed the uppermost point in its rotation. In order to regulate the discharged amount of air, the nozzle in the guide vane/duct can be provided with a movable air valve. This air valve can be adjusted manually or by means of a servo motor, which in its turn can be controlled from the control electronics for the preparation process. The amount of the secondary air flow can then be adapted to the filling ratio of the preparation basket.

By means of combining the different described measures in a correct manner, both a shorter preparation time as well as a higher quality of the finally prepared food product can be obtained. This can be accomplished despite the fact that the temperature never intermittently exceeds the limit which has a detrimental effect on the food product being prepared. Something which is very common in ovens existing on the market. In certain situations, carcinogenic or otherwise harmful substances can be formed at high temperatures.

Depending on which type of oven the comparison is made with, the preparation time achievable with a device and method based upon what has been described in the foregoing can be reduced with up to 50 %, and in some cases even more. This is something which is of very great importance for fast food preparation in, for example, lunch restaurants, street kitchens and the like, since a reduced preparation time results in increased production, faster turnover, increased profitability and thus larger profit.

### LIST OF FIGURES

In the following, the invention will be described in greater detail with reference to the accompanying figures, in which:
- Fig. 1: shows an embodiment of an oven according to the invention in a vertical section through the longitudinal axis of the oven fan, and the entire oven compartment with outer casing.

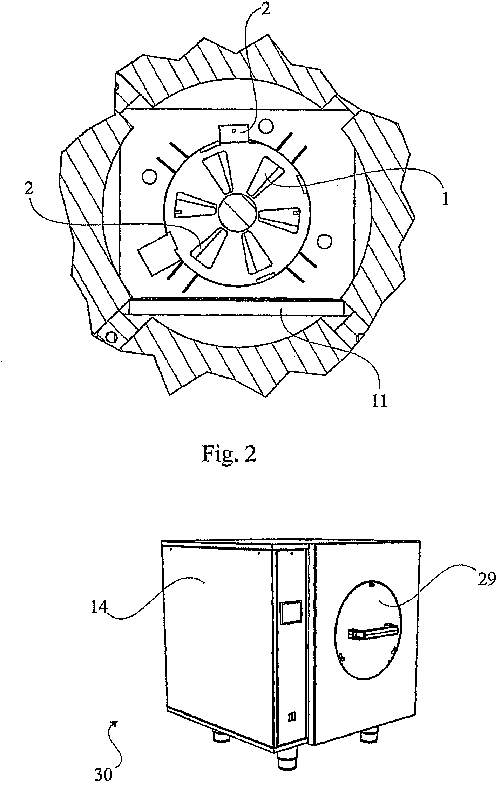

- Fig. 2: shows an inventive embodiment of an air valve as seen from the outside of the oven compartment.

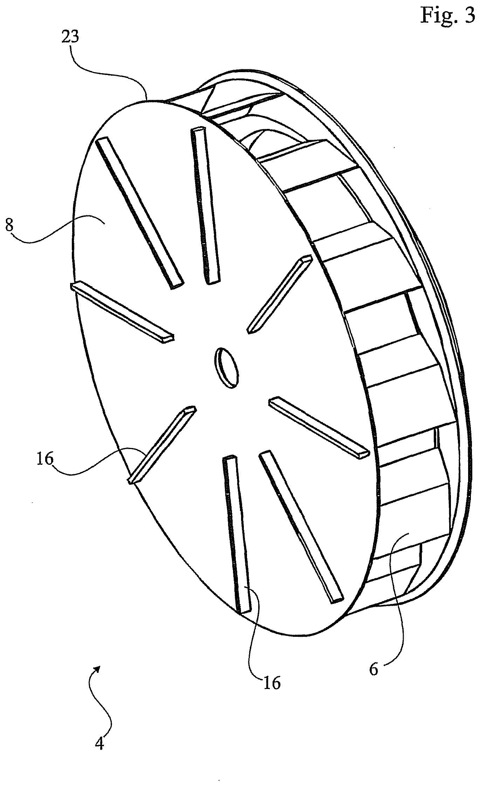

- Fig. 3: shows a circulating fan with additional blades according to an inventive embodiment.
- Fig. 4a: shows a guide vane according to an inventive embodiment.
- Fig. 4b: shows the guide vane of Fig. 4a as seen from another angle.
- Fig. 5a: shows the preparation basket according to an inventive embodiment.
- Fig. 5b: shows a longitudinal section of the extractable member of the preparation basket.
- Fig. 6: shows a magnification around the shaft of the circulating fan according to an inventive embodiment.

List of clarifications with regard to reference numerals.
- 1: Air inlet for cold ventilating air
- 2: Cold air valve in inlet opening 1
- 3: Oven compartment
- 4: Circulating fan in oven compartment 3
- 5: Shaft of the circulating fan 4
- 6: Blades on the circulating fan 4
- 7: Heating elements in the oven compartment 3
- 8: The backside of the circulating fan 4
- 10: Outside of the oven compartment 3
- 11: Collecting trough on the outside 10 of the oven compartment 3
- 12: Drainage duct from the collecting trough 11
- 13: Ventilating and/or cooling fan in outer casing 14 of oven compartment 3
- 14: Outer casing of the oven compartment 3
- 15: Ventilating pipe connecting the oven compartment 3 to the surrounding atmosphere
- 16: Smaller blades on the backside 8 of the circulating fan 4
- 17: Preparation basket in the oven compartment 3
- 18: Intake opening for the circulating fan 4
- 19: Guide vane/duct in the oven compartment 3
- 20: Food product being prepared in preparation basket 17
- 21: Main nozzle in guide vane/duct 19 for the primary flow of cooking air which is forced upward and through food product 20 being prepared
- 22: Gap between the fan wheel 4 and the oven compartment 3
- 23: The periphery of the circulating fan 4
- 24: Nozzle in guide vane/duct 19 for blowing in secondary air flow toward the falling side of the food product 20 being prepared inside the rotary preparation basket 17
- 25: Air valve in nozzle 24 for secondary air flow
- 26: Blade inside preparation basket 17 for transporting food product 20 being prepared upward toward circulating fan 4 intake opening 18
- 27: Rim around the intake opening 18
- 28: Debris container in the guide vane 19
- 29: Door
- 29a: outer part of door 29
- 29b: inner part of door 29
- 30: Convection oven
- 31: inner member of preparation basket 17
- 32: extractable member of preparation basket 17
- 33: handle of door 29
- 34: angled posterior base member
- 35: vertically extending space
- 36: Upper opening in outer door part 29a
- 37: Lower opening in outer door part 29a
- 38: Upper air valve in the space 35
- 39: Solenoid for upper air valve

The present invention solves the problems related previously in a simple way. A general embodiment, which can be varied in a variety of different ways, is described herein. An air inlet 1, with or without a cold air valve 2 for the incoming ventilating air, is placed behind the circulating fan 4 in an oven compartment 3, in close connection with the shaft 5 of the circulating fan 4. The inlet 1 is placed close to the shaft 5 or distributed around and close to the shaft 5 of the fan 4. When the cold air valve 2 is open, the cold ventilating air enters in a gap 22 behind the circulating fan 4. Due to the rotation of the circulating fan 4, the incoming ventilating air distributes substantially uniformly, radially outward from the centre of the circulating fan 4 toward its periphery 23 and back into the cooled down heat transport medium, which has emitted heat to the food product 20 being prepared, at the same time as the cooled down heat transport medium, with cold ventilating air homogenously mixed in, is forced forward by the blades 6 of the circulating fan 4.

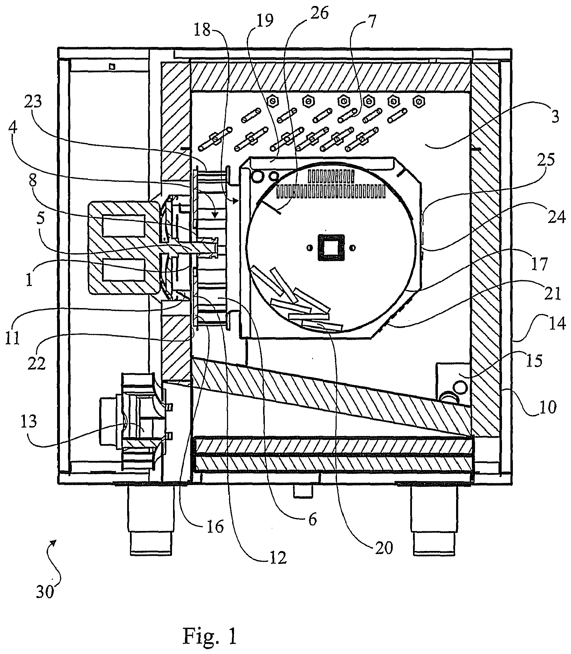

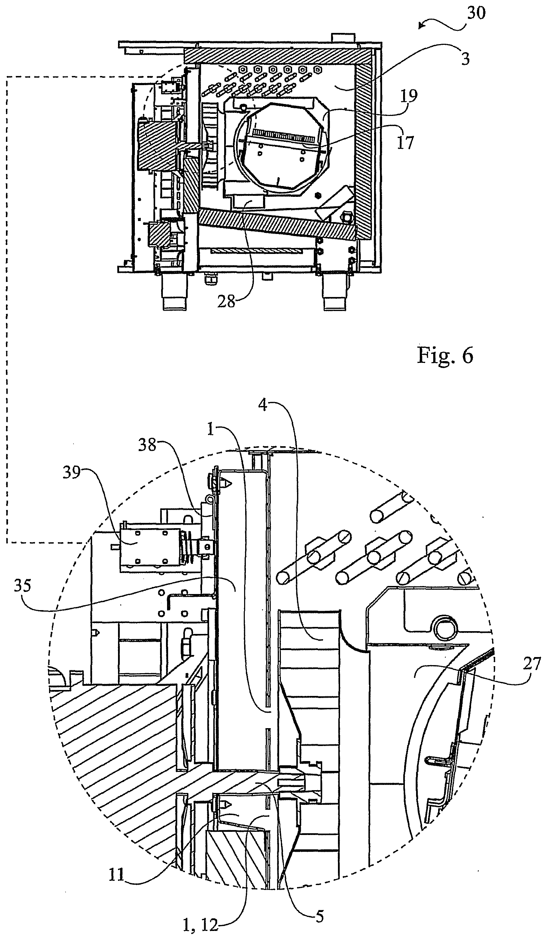

The dry and cold ventilating air, which is substantially uniformly mixed into the heat transport medium, which has been cooled down during the passage through the food product 20 being prepared in the horizontally rotating preparation basket 17, once again assumes the set desired temperature being most advantageous for the food preparation during passage through heating elements 7. This heat transport medium, which has become drier through addition of cold ventilating air and heating after passage through heating elements 7, is now directed in such a way by means of a guide vane 19, which can also be designed as a duct, that a primary air flow is blown upward through one or several main nozzles 21 toward and through the bottom side of a rotating, horizontally journalled preparation basket 17, whereby the food product 20 being prepared, when consisting of smaller pieces, is through-passed by the heat transport medium. For small food products 20 being prepared, it applies that they follow the rotating preparation basket 17 upward toward the intake side of the circulating fan 4, whereupon they fall down to the lower region in the preparation basket 17, toward which the main nozzles 21 are directed. The heat transport medium then emits a larger portion of its heat content inside the kneaded mass of the food product 20 being prepared, and is saturated with vapour therein, before it is once again sucked into the circulating fan 4 through the intake opening 18. The process is repeated until the desired end result has been achieved. In order to avoid that the heat transport medium, so to speak, escapes past the food products 20 being prepared in the preparation basket 17, and flows into the intake opening 18 to the circulating fan 4, this can be accomplished by means of the guide vane/duct 19 surrounding the rotary preparation basket 17, which is cylinder-shaped, with the centre of the base members lying at the centre of the axis of rotation, instead of being designed as a box consisting of two planar sides, bottom and cover, in addition to the two ends. In the present patent text, cylinder-shaped means that the cross-section is either circular, as shown in Fig. 1, or a polygon having at least 6 edges, preferably at least 8 edges, as shown for example in Fig. 6.

Since the preparation basket 17 is cylinder-shaped, it takes more than if it were designed as a box with four sides, at the same time as the guide vane/duct 19 can surround the preparation basket 17 more tightly, in such a way that the air discharged mainly through the main nozzle 21 is forced into the product 20 being prepared from below and passes through the food product 20 being prepared toward the intake opening 18 to the circulating fan 4.

When the preparation basket 17 is designed as a horizontally suspended, cylinder-shaped basket and the guide vane 19 surrounds the rotating, cylinder-shaped preparation basket 17, the space for the preparation basket 17 can be made very small. In this way, the possibility of the heat transport medium reaching the intake opening 18 of the circulating fan 4 without having passed through the food product 20 being prepared is reduced. Then, generally speaking, it is only the air leaking out from the roll of food product being prepared, on the falling side of the roll and being present in the portion of the preparation basket furthest away from the intake opening 18 to the circulating fan 4, which will be blown away by the secondary air flow from the nozzle 24 in the guide vane 19. The inside of the preparation basket 17 is provided with an axially extending blade 26 between the base members of the cylinder-shaped preparation basket 17, preferably 2 axially extending blades 26. The blade 26 lifts the food product being prepared toward and upward past the intake opening 18. The intake opening 18 of the circulating fan 4 is so designed that it, in the guide vane/duct 19, extends axially parallel along the cylinder-shaped, horizontally suspended preparation basket 17.

At the backside 8 of the circulating fan 4, where normally there are no air-propelling blades, a lower pressure is formed in the gap 22, at the inner centre of the circulating fan 4, due to the rotation of the circulating fan 4. This negative pressure contributes to the flow of the cold ventilating air. The air inlet 1 for the ventilating air can be provided with a cold air valve 2, which is placed in the air intake 1 on the wall of the oven compartment 3. The air intake 1 in the wall of the oven compartment 3 lies relatively close to the backside 8 of the circulating fan 4 and creates a negative pressure during rotation of the fan wheel 4. The gap 22 has to be adapted to the amount of air which is desired, and to the size of the air inlet 1. When large air flows are necessary and there is no positive pressure inside an outer casing 14 or a ventilating and/or cooling fan 13 is missing, also the backside 8 of the circulating fan 4 can be provided with a number of smaller, axially disposed blades 16, analogous with the blades 6 of the circulating fan 4, which then generate the inflow of cold ventilating air.

In those cases when an oven is provided with an automatic cleaning system, where the circulating fan 4 rotates at a high speed during the entire cleaning procedure, the lower pressure arising at the centre of the fan wheel 4 contributes to preventing rinsing and/or washing liquids from leaking out through the cold air valve 2 behind the circulating fan 4. The oven compartment 3 is always in communication with the external atmospheric pressure via the ventilating pipe 15. When the air pressure, because of cooling fan devices for electronics, touchable surfaces, etc., is higher in outer casing 14 than in oven compartment 3, the air pressure at the shaft 5 behind the rotating circulating fan 4 is even lower. Should there be a risk of leakage through any gaps around the fan shaft 5 and/or through the cold air valve 2, when it is closed, the positive pressure inside the outer casing 14 presses rinsing and washing liquids back into the oven compartment 3, whereby any form of leakage has been effectively prevented. Should, in spite of this, a risk of a certain leakage exist, for example if the positive pressure of the outer casing 14 were to disappear, a collecting trough 11, collecting the liquid which might leak out, can be mounted on the outside 10 of the oven compartment 3, underneath the entire width of the air valve 2. This liquid can be returned to the oven compartment 3 or led to a sewer via a drainage duct 12.

The amount of ventilating air is dependent upon the pressure which can be created by a positive pressure inside the outer casing 14 being produced by a special ventilating and/or cooling fan 13, or by the suction effect obtained by means the backside 8 of the circulating fan 4 having been provided with smaller wings 16, pressing air into the oven compartment 3. The oven compartment 3 is connected to the external atmosphere via a ventilating pipe 15, which causes the oven compartment 3 to maintain substantially the same air pressure as the surrounding atmosphere. The relatively large pressure difference relative to the environment which is created in the oven compartment 3 effectively prevents that rinsing and/or washing liquid could leak out through any lead-through from the outer casing 14 into the oven compartment 3 during an ongoing cleaning process.

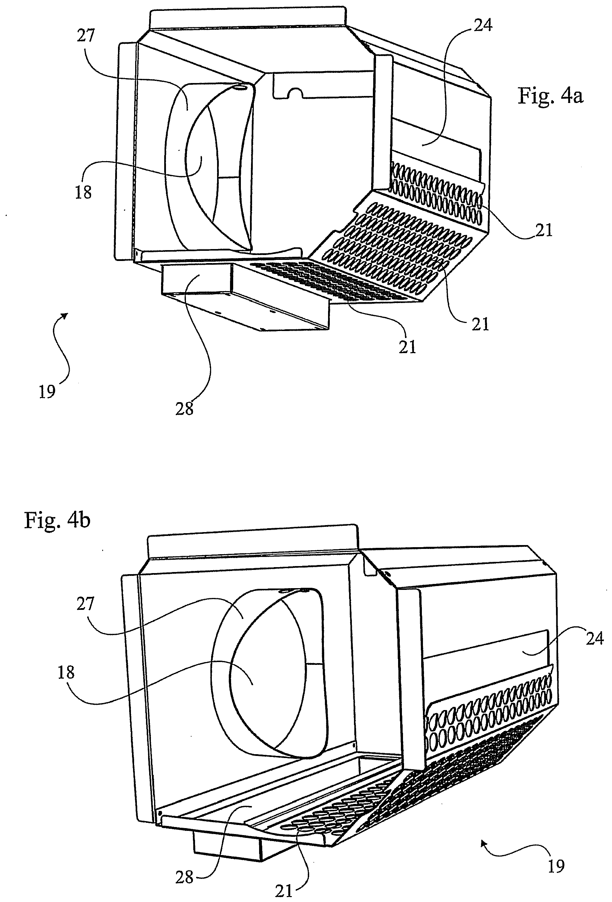

Figs. 4a and 4b show an example of a guide vane 19. The main nozzle 19 is shown as a plurality of circular apertures in the lower portion of the guide vane 19. Air which is sucked in by the circulating fan 4 in the intake opening will thereby flow upward through the preparation basket 17. The nozzle 24 for the secondary air flow lies at the side opposite to the intake opening 18. In this example, the intake opening 18 is provided with an surrounding rim 27 which concentrates the air intake at the preparation basket, preferably that end of the rim which meets the preparation basket 17 has an arcuate termination adapted to the cylinder-shaped preparation basket 17 as is evident from Fig. 6, the rim is preferably more than 1.5 cm wide in its smallest extension. The front end of the circulating fan 4 is placed so that it is inside the rim 27 (see Fig. 6). The guide vane 19 in Figs. 4a, 4b is also provided with an axially extending container/trough 28, intended for collecting debris which might arise from the food products 20 being prepared in the preparation basket 17. In the shown example, the container 28 is located in the lower portion of the guide vane 19, below the intake opening 18.

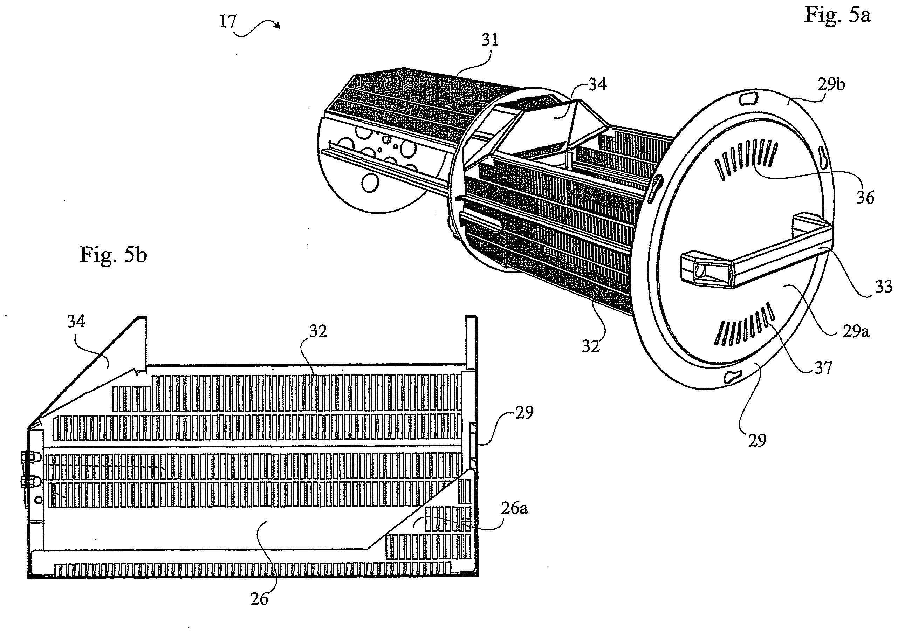

Fig. 5a shows a cylinder-shaped preparation basket 17. The preparation basket 17 has two members, which are axially displaceable relative to each other, an inner member 31 which is rotatably attached in the oven compartment 3, and an extractable member 32 which can be pulled out so that the preparation basket 17 can be filled with food products 20 to be prepared. At its outer end, the extractable member 32 is rotatably attached to a door 29 having a handle 33. At the opposite end, the posterior base member/end of the extractable member 32 is partially angled 34. This implies that food products 20 being prepared in the preparation basket will be moved away from the posterior base member/end toward the centre of the preparation basket 17 when it is rotated. The axially extending blade 26 is seen in Fig. 5b, and it has an increasing width in the form of a triangular termination 26a at the end meeting the door 29. This will also cause food products 20 being prepared in the preparation basket 17 to be moved in a direction toward its centre during rotation of the preparation basket 17. To sum up, both the angled posterior base member 34 and the triangular termination 26a serve as centralizing means of the preparation basket 17, so that food products 20 being prepared therein are moved toward the centre of the preparation basket 17 during its rotation. The door 29 consists of two parts 29a and 29b having an insulating gap between themselves, an outer part 29a to which the handle 33 is attached, and an inner part 29b facing toward the oven compartment 3 and to which the preparation basket 17 is journalled. The outer part 29a has an upper opening 36 and a lower opening 37 allowing the gap to come in contact with surrounding air, wherein air can flow in through the lower opening 37 and out through the upper opening 36, so that the temperature of the outer part 29a is kept down, even if the temperature inside the oven 30 is high.

Fig. 6 shows an example of a convection oven according to the invention, with an enlarged illustration of the area around the circulating fan 4. Here, it is evident that the lowermost air inlet 1 for cold ventilating air also serves as a drainage duct 12 to the oven compartment 3, and by arranging the collecting trough 11 so that it slopes downward toward the oven compartment 3, any liquid entering during washing will flow back into the oven compartment 3. In this embodiment, there is no air valve at the air inlet 1, but instead there is a vertically elongated space 35 behind the air inlet 1. The space 35 stands in communication with the pressurized outer casing 14, through an air valve 38 at its upper end which can be opened and closed by a solenoid 39 or another opening device, and the fan shaft 5 extends in the lower portion of the space 35, from the pressurized outer casing 14 through the space 35 and out into the oven compartment 3. The air inlet 1 to the oven compartment 3 is also arranged in the lower portion of the space around the shaft 5. When the air valve 38 is open, air can be pressed into the space 35 by the fan 13, and then through the air inlet 1 into the oven compartment 3 in order to be mixed with recirculating air in the oven compartment 3 at the periphery 23 of the circulating fan 4. During washing, the air valve 38 is kept closed and, since it is placed in the upper end, any water splashing up will not reach sufficient pressure to penetrate out through the air valve 38 into the pressurized outer casing 14.

Thus, according to a preferred embodiment, it applies that the substantially uniformly heated heat transport medium is forced by a guide vane or duct to emit the largest possible amount of the energy content inside the kneaded mass of the product being prepared by means of a primary air flow being positively directed from below through the entire mass of the product being prepared, and that a secondary, smaller air flow is directed toward that side of the preparation product which is falling downward during the kneading and which is furthest away from the intake opening to the circulating fan. In other words, by means of the preferred embodiment of the invention, a reduction of the preparation time is obtained by ensuring a uniform distribution of dry, cold ventilating air into a circulating heat transport medium, so that no zones of cold air arise, and that the heat transport medium is heated and positively directed so that the major part of the heated heat transport medium is forced by a directed nozzle to pass from below and upward and through, instead of over and around, a food product being prepared consisting of many small pieces, so that the heat transport medium emits its energy content inside the mass of the food product being prepared, and to carry away the vapour which is formed around each individual small piece, and that there is a directed, weaker air flow for carrying away the water vapour and/or humid air which, at greater filling ratios of food products being prepared in the preparation basket, has a tendency to follow the falling shell surface of the food product being prepared rotating in the food preparation basket, and that this weaker air flow emanates from a nozzle in a guide vane/duct for positively directing the hot heat transport medium in order to ensure that all parts included in the food product being prepared uniformly obtain a browned, crisp surface while maintaining a juicy inside.

It is preferred to have high air flow rates in order to achieve a good preparation. During operation, the air flow rate preferably exceeds 100 m³/h per kg of food product being prepared, more preferably 200 m³/h per kg of food product being prepared. That is to say, for an oven having the capacity of preparing 2.5 kg food products to be prepared, it is preferred that the air flow rate is at least 250 m³/h, more preferably 500 m³/h. At such high air flow rates, the positive pressure at the periphery 23 of the circulating fan 4 can be above 100 Pa. Therefore, the air inlets 1 are preferably positioned so close to the shaft 5 that the positive pressure at the air inlet 1 is below 30 Pa during operation, preferably so that the positive pressure is below 25 Pa, even more preferably so that the positive pressure is below 25 Pa. It is preferred that the ventilating fan 13 creates a positive pressure inside the outer casing of at least 30 Pa, preferably between 40-60 Pa, to introduce air through the inlet 1. The air inlets are preferably positioned at a distance within 70 mm from the centre of the fan shaft 5.

## Claims

1. A device for convection oven preparation of food, comprising an oven compartment (3) having a rotary preparation basket (17), a circulating fan (4), at least one heating element (7), at least one air inlet (1) for cold air, **characterized in that** said at least one air inlet (1) for cold ventilating air is placed in close vicinity of a shaft (5) of said circulating fan (4), and that a gap (22) is arranged between said circulating fan (4) and the wall in said oven compartment (3), so that the dry ventilating air can flow out into the gap (22) between the backside (8) of the circulating fan (4) and the wall of the oven compartment (3), whereby the cold ventilating air, due to the rotation of the circulating fan (4), is centrifugally discharged radially and mixed substantially uniformly into the circulating heat transport medium at the periphery (23) of the circulating fan (4), a guide vane/duct (19) surrounds the rotary preparation basket (17), the guide vane (19) has an intake opening (18) for the circulating fan (4), located between the uppermost and lowermost portion of the preparation basket (17), and one or several main nozzles (21) directed towards the lower portion of the preparation basket (17), so that a primary air flow can be sucked in through the main nozzle (21), pass through the preparation basket (17) and food products (20) being prepared therein, and then out through the intake opening (18) to the circulating fan (4).

2. The device according to claim 1, **characterized in that** the guide vane (19) has a second nozzle (24), located at the side opposite to the intake opening (18) and directed to guide a secondary air flow toward the falling side of a food product/food products (20) being prepared in the rotary preparation basket (17).

3. The device according to claim 2, **characterized in that** the second nozzle (24) is provided with an air valve (25), so that the secondary air amount through the nozzle (24) can be regulated.

4. The device according to claim 1, **characterized in that** the preparation basket (17) is provided on its inner side with at least one axially extending blade (26).

5. The device according to claim 4, **characterized in that** the preparation basket (17) is provided on its inner side with at least two axially extending blades (26).

6. The device according to anyone of the foregoing claims, **characterized in that** said oven compartment (3) is connected to the surrounding atmosphere via a ventilating pipe (15).

7. The device according to anyone of the foregoing claims, **characterized in that** the at least one air inlet (1) is several smaller openings around and close to the shaft of the circulating fan (4).

8. The device according to anyone of the foregoing claims, **characterized in that** the backside (8) of the circulating fan (4) is provided with radial blades (16) for sucking in ventilating air through the air inlet (1).

9. The device according to anyone of the foregoing claims, **characterized in that** a ventilating and/or cooling fan (13) is arranged to create a positive pressure inside an outer casing (14) of the oven compartment (3), so that larger amounts of dry, cold ventilating air can flow in through the air inlet (1) and further into the gap (22), and so that the dry, cold ventilating air can be homogenously mixed into the circulating heat transport medium at the outer periphery (23) of the circulating fan (4).

10. Device according to claim 9, **characterized in that** a vertically extending space (35) is arranged behind the air inlet (1), said space (25) being in communication at its lower end with the oven compartment (2) via said air inlet (1), and at its upper end with the pressurized outer casing (14) and the upper end of the space (35).

11. The device according to anyone of the preceding claims, **characterized in that** the preparation basket (17) is cylinder-shaped and horizontally suspended.

12. The device according to anyone of the preceding claims, **characterized in that** the guide vane (19), in its lower part, has a container (28) for collecting debris.

13. The device according to claim 12, **characterized in that** the container (28) is detachable or contains a detachable inner container, so that it easily can be removed from the oven for emptying.

14. The device according to anyone of the preceding claims, **characterized in that** the guide vane (19) has a rim around the intake opening (18) which surrounds the front end of the circulating fan (4).

15. The device according to anyone of the preceding claims, **characterized in that** the oven has a door (29) to which one end of the preparation basket (17) is rotatably attached.

16. The device according to claim 15, **characterized in that** the door (29) comprises two substantially planar parts, an inner part (29b) facing towards the oven compartment (3) and an outer part (29a) having a handle (33), and which form an air gap between themselves.

17. The device according to claim 16, **characterized in that** the outer part (29a) has at least one opening (36) to the air gap, preferably at least one upper opening (36) on the upper portion of the outer part (29a) and at least one lower opening (37) on the lower portion of the outer part (29a).

## Patentansprüche

1. Vorrichtung für die Konvektionsofenzubereitung von Lebensmitteln, umfassend eine Ofenkammer (3) mit einem sich drehenden Zubereitungskorb (17), einem Umwälzgebläse (4), mindestens einem Heizelement (7), mindestens einen Lusteinlass (1) für kalte Luft, **dadurch gekennzeichnet, dass** der mindestens eine Lufteinlass (1) für kalte Ventilationsluft in der Nähe einer Welle (5) des Umwälzgebläses (4) platziert ist und dass ein Spalt (22) zwischen dem Umwälzgebläse (4) und der Wand in der Ofenkammer (3) angeordnet ist, so dass die trockene Ventilationsluft in den Spalt (22) zwischen der Rückseite (8) des Umwälzgebläses (4) und der Wand der Ofenkammer (3) hinausströmen kann, wodurch die kalte Ventilationsluft aufgrund der Drehung des Umwälzgebläses (4) zentrifugal radial abgelassen und im Wesentlichen gleichmäßig in das zirkulierende Wärmetransportmedium am Umfang (23) des Umwälzgebläses (4) gemischt wird, ein Leitflügel/-kanal (19) den sich drehenden Zubereitungskorb (17) umgibt, der Leitflügel (19) eine Aufnahmeöffnung (18) für das Umwälzgebläse aufweist, die sich zwischen dem obersten und dem untersten Abschnitt des Zubereitungskorbs (17) und einer oder mehreren Hauptdüsen (21), die auf den untersten Abschnitt des Zubereitungskorbs (17) gerichtet sind, befindet, so dass ein primärer Luftstrom durch die Hauptdüse (21) eingesaugt werden kann, der durch den Zubereitungskorb (17) und die Lebensmittelprodukte (20), die darin zubereitet werden, und dann durch die Aufnahmeöffnung (18) zum Umwälzgebläse (4) verläuft.

2. Vorrichtung nach Anspruch 1, **dadurch gekennzeichnet, dass** der Leitflügel (19) eine zweite Düse (24) aufweist, die sich an der der Aufnahmeöffnung (18) gegenüberliegenden Seite befindet und ausgerichtet ist, um einen sekundären Luftstrom zur abfallenden Seite eines Lebensmittelprodukts/von Lebensmittelprodukten (20), das/die in dem sich drehenden Zubereitungskorb (17) zubereitet wird/werden, hin zu leiten.

3. Vorrichtung nach Anspruch 2, **dadurch gekennzeichnet, dass** die zweite Düse (24) mit einem Luftventil (25) versehen ist, so dass die sekundäre Luftmenge durch die Düse (24) reguliert werden kann.

4. Vorrichtung nach Anspruch 1, **dadurch gekennzeichnet, dass** der Zubereitungskorb (17) an seiner Innenseite mit mindestens einer sich axial erstreckenden Schaufel (26) versehen ist.

5. Vorrichtung nach Anspruch 4, **dadurch gekennzeichnet, dass** der Zubereitungskorb (17) an seiner Innenseite mit mindestens zwei sich axial erstreckenden Schaufeln (26) versehen ist.

6. Vorrichtung nach einem der vorhergehenden Ansprüche, **dadurch gekennzeichnet, dass** die Ofenkammer (3) mit der Umgebungsatmosphäre über ein Ventilationsrohr (15) verbunden ist.

7. Vorrichtung nach einem der vorhergehenden Ansprüche, **dadurch gekennzeichnet, dass** der mindestens eine Lufteinlass (1) mehrere kleinere Öffnungen um und nahe der Welle des Umwälzgebläses (4) ist.

8. Vorrichtung nach einem der vorhergehenden Ansprüche, **dadurch gekennzeichnet, dass** die Rückseite (8) des Umwälzgebläses (4) mit radialen Schaufeln (16) versehen ist, um die Ventilationsluft durch den Lufteinlass (1) einzusaugen.

9. Vorrichtung nach einem der vorhergehenden Ansprüche, **dadurch gekennzeichnet, dass** ein Ventilations- und/oder Kühlgebläse (13) angeordnet ist, um einen Überdruck innerhalb eines Außengehäuses (14) der Ofenkammer (3) zu erzeugen, so dass größere Mengen an trockener, kalter Ventilationsluft durch den Lufteinlass (1) hinein und weiter in den Spalt (22) strömen können, und so dass die trockene, kalte Ventilationsluft in das zirkulierende Wärmetransportmedium am äußeren Umfang (23) des Umwälzgebläses (4) homogen gemischt werden kann.

10. Vorrichtung nach Anspruch 9, **dadurch gekennzeichnet, dass** ein sich vertikal erstreckender Raum (35) hinter dem Lufteinlass (1) angeordnet ist, wobei der Raum (25) an seinem unteren Ende mit der Ofenkammer (2) über den Lufteinlass (2) und an seinem oberen Ende mit dem unter Druck stehenden Außengehäuse (14) und dem oberen Ende des Raums (35) in Kommunikation steht.

11. Vorrichtung nach einem der vorhergehenden Ansprüche, **dadurch gekennzeichnet, dass** der Zubereitungskorb (17) zylinderförmig und horizontal hängend ist.

12. Vorrichtung nach einem der vorhergehenden Ansprüche, **dadurch gekennzeichnet, dass** der Leitflügel (19) an seinem unteren Teil einen Behälter (28) zum Sammeln von Rückständen aufweist.

13. Vorrichtung nach Anspruch 12, **dadurch gekennzeichnet, dass** der Behälter (28) entfernbar ist oder einen entfernbaren inneren Behälter umfasst, so dass er leicht aus dem Ofen zum Entleeren entnommen werden kann.

14. Vorrichtung nach einem der vorhergehenden Ansprüche, **dadurch gekennzeichnet, dass** der Leitflügel (19) einen Rand um die Entnahmeöffnung (18) aufweist, welcher das vordere Ende des Umwälzgebläses (4) umgibt.

15. Vorrichtung nach einem der vorhergehenden Ansprüche, **dadurch gekennzeichnet, dass** der Ofen eine Tür (29) aufweist, an welche ein Ende des Zubereitungskorbs (17) drehbar befestigt ist.

16. Vorrichtung nach Anspruch 15, **dadurch gekennzeichnet, dass** die Tür (29) zwei im Wesentlichen planare Teile umfasst, wobei ein inneres Teil (29b) zur Ofenkammer (3) hin zeigt und ein äußeres Teil (29a) einen Griff (33) aufweist, und welche einen Luftspalt zwischen ihnen bilden.

17. Vorrichtung nach Anspruch 16, **dadurch gekennzeichnet, dass** das äußere Teil (29a) mindestens eine Öffnung (36) zum Luftspalt, vorzugsweise mindestens eine obere Öffnung (36) am oberen Abschnitt des äußeren Teils (29a) und mindestens eine untere Öffnung (37) am unteren Abschnitt des oberen Teils (29a), aufweist.

## Revendications

1. Dispositif pour la préparation d'aliments dans un four à convection, comprenant un compartiment de four (3) comportant un panier de préparation rotatif (17), un ventilateur de circulation (4), au moins un élément chauffant (7), au moins une entrée d'air (1) pour l'air froid, **caractérisé en ce que** ladite au moins une entrée d'air (1) pour l'air de ventilation froid est placée à proximité immédiate d'un arbre (5) dudit ventilateur de circulation (4), et **en ce qu'**un espace (22) est prévu entre ledit ventilateur de circulation (4) et la paroi dans ledit compartiment de four (3), de telle façon que l'air de ventilation sec peut s'écouler dans l'espace (22) entre le côté arrière (8) du ventilateur de circulation (4) et la paroi du compartiment de four (3), moyennant quoi l'air de ventilation froid, du fait de la rotation du ventilateur de circulation (4), est déchargé de manière centrifuge radialement et mélangé substantiellement uniformément dans le milieu caloporteur en circulation au niveau de la périphérie (23) du ventilateur de circulation (4), une aube/conduite de guidage (19) entoure le panier de préparation rotatif (17), l'aube de guidage (19) comporte une ouverture d'admission (18) pour le ventilateur de circulation (4), située entre la partie la plus basse et la partie la plus haute du panier de préparation (17), et une ou plusieurs buses principales (21) dirigées vers la partie inférieure du panier de préparation (17), de telle façon qu'un flux d'air primaire peut être aspiré à travers la buses principales (21), traverser le panier de préparation (17) et les produits alimentaires (20) en cours de préparation dans celui-ci, puis sortir par l'ouverture d'admission (18) vers le ventilateur de circulation (4).

2. Dispositif selon la revendication 1, **caractérisé en ce que** l'aube de guidage (19) comporte une deuxième buse (24) située sur le côté opposé à l'ouverture d'admission (18) et dirigée de manière à guider un flux d'air secondaire vers le côté incliné d'un produit alimentaire/des produits alimentaires (20) en cours de préparation dans le panier de préparation rotatif (17).

3. Dispositif selon la revendication 2, **caractérisé en ce que** la deuxième buse (24) est dotée d'une soupape à air (25), de manière à pouvoir réguler la quantité d'air secondaire à travers la buse (24).

4. Dispositif selon la revendication 1, **caractérisé en ce que** le panier de préparation (17) est doté d'au moins une lame s'étendant axialement (26) sur son côté intérieur.

5. Dispositif selon la revendication 4, **caractérisé en ce que** le panier de préparation (17) est doté d'au moins deux lames s'étendant axialement (26) sur con côté intérieur.

6. Dispositif selon l'une quelconque des revendications précédentes, **caractérisé en ce que** ledit compartiment de four (3) est relié à l'atmosphère environnante par le biais d'un tuyau de ventilation (15).

7. Dispositif selon l'une quelconque des revendications précédentes, **caractérisé en ce que** l'au moins une entrée d'air (1) consiste en plusieurs ouvertures plus petites autour et à proximité de l'arbre du ventilateur de circulation (4).

8. Dispositif selon l'une quelconque des revendications précédentes, **caractérisé en ce que** le côté arrière (8) du ventilateur de circulation (4) est doté de lames radiales (16) destinées à aspirer de l'air de ventilation à travers l'entrée d'air (1).

9. Dispositif selon l'une quelconque des revendications précédentes, **caractérisé en ce qu'**un ventilateur d'aération et/ou de refroidissement (13) est conçu pour créer une pression positive à l'intérieur d'un boîtier extérieur (14) du compartiment de four (3), de telle façon que de plus grandes quantités d'air de ventilation sec et froid peuvent s'écouler par l'entrée d'air (1) et plus loin dans l'espace (22), et de telle façon que l'air de ventilation sec et froid peut être mélangé de façon homogène dans le milieu caloporteur en circulation au niveau de la périphérie extérieure (23) du ventilateur de circulation (4).

10. Dispositif selon la revendication 9, **caractérisé en ce qu'**un espace s'étendant verticalement (35) est prévu derrière l'entrée d'air (1), ledit espace (25) étant en communication à son extrémité inférieure avec le compartiment de four (3) par le biais de ladite entrée d'air (1), et à son extrémité supérieure avec le boîtier extérieur sous pression (14) et l'extrémité supérieure de l'espace (35).

11. Dispositif selon l'une quelconque des revendications précédentes, **caractérisé en ce que** le panier de préparation (17) est de forme cylindrique et suspendu horizontalement.

12. Dispositif selon l'une quelconque des revendications précédentes, **caractérisé en ce que** l'aube de guidage (19) comporte un récipient (28) pour la collecte de déchets à son extrémité inférieure.

13. Dispositif selon la revendication 12, **caractérisé en ce que** le récipient (28) est amovible ou contient un récipient intérieur amovible, de manière à pouvoir être retiré facilement du four pour être vidé.

14. Dispositif selon l'une quelconque des revendications précédentes, **caractérisé en ce que** l'aube de guidage (19) comporte un rebord autour de l'ouverture d'admission (18), lequel entoure l'extrémité avant du ventilateur de circulation (4).

15. Dispositif selon l'une quelconque des revendications précédentes, **caractérisé en ce que** le four possède une porte (29) à laquelle une extrémité du panier de préparation (17) est fixée de façon rotative.

16. Dispositif selon la revendication 15, **caractérisé en ce que** la porte (29) comprend deux parties substantiellement planaires, une partie intérieure (29b) tournée vers le compartiment de four (3) et une partie extérieure (29a) possédant une poignée (33), lesquelles forment un espace d'air entre elles.

17. Dispositif selon la revendication 16, **caractérisé en ce que** la partie extérieure (29a) comporte au moins une ouverture (36) vers l'espace d'air, de préférence au moins une ouverture supérieure (36) dans la partie supérieure de la partie extérieure (29a) et au moins une ouverture inférieure (37) dans la partie inférieure de la partie extérieure (29a).
